# EUROPEAN PATENT SPECIFICATION

(11) **EP 1 985 589 B1**
(45) Date of publication and mention of the grant of the patent: **28.03.2012**
(21) Application number: 08155087.3
(22) Date of filing: 24.04.2008
(51) Int. Cl.: C02F 1/44, C02F 1/28, C02F 9/00, C02F 1/00, C02F 1/461

(54) **Water purifying apparatus**
Wasserreinigungsvorrichtung
Appareil de purification d'eau

(30) Priority: 24.04.2007 KR 20070040006; 02.08.2007 KR 20070077886
(43) Date of publication of application: 29.10.2008
(73) Proprietor: Woongjin Coway Co., Ltd., Choongcheongnam-do Gongju 314-895 (KR)
(72) Inventor: Kim, Won Nyun, Seoul (KR); Park, Sang Hyon, Nowon-gu (KR); Jo, Woo Sung, Seoul (KR)
(74) Representative: van Westenbrugge, Andries

(56) References cited:
- WO-A-2005/030363
- WO-A-2005/039735
- DE-U1- 29 823 757
- US-A- 5 518 598
- US-A1- 2003 080 034
- US-A1- 2003 213 755
- US-A1- 2004 256 243
- US-A1- 2007 084 771

## Description

The invention is related to a water purifying apparatus, comprising a filter unit for filtering water to obtain purified water; a purified water pipe through which the purified water discharged from the filter unit flows; and a cooling unit cooling the purified water pipe to generate cold water.

Such a water purifying apparatus is disclosed in DE-U-29823757. In said apparatus, the purified water pipe is directly cooled through the cooling unit. This may have the disadvantage that the purified water in the purified water pipe may be frozen.

In general, a water purifying apparatus is an apparatus for filtering foreign objects or heavy metals that are present in water. The water purifying apparatus includes a water purifier, a water ionizer, etc.

Cold and hot water tanks storing water purified through a filter may be installed in the water purifying apparatus. Water that is previously cooled is stored in the cold water tank, and water that is previously heated is stored in the hot water tank.

Also, an electrolyzer may be installed in the water purifying apparatus to electrolyze water, thereby providing alkaline water. In this case, a pump is installed in the electrolyzer to force the electrolyzed alkaline water to flow to a water intake unit.

However, since cold water is stored in the cold water tank for an long time, the cold water may be contaminated as external foreign objects penetrate into the cold water tank. Also, the inner surface of the cold water tank may be incrusted with slime by accumulating unfiltered substances in the cold water to the cold water tank, and therefore water stored in the cold water tank may be re-contaminated.

In addition, since scales formed in the electrolysis are accumulated in the cold water tank, the cold water may flow out with its being mixed with the scales.

Additionally, pH density of the cold water may be reduced when the cold water is stored in the cold water tank for a certain period. Furthermore, the reduced pH density of the cold water makes it difficult to obtain water with desired pH density.

A further water purifying apparatus is disclosed in US-A-551 0 590.

The object of the invention is to provide a water purifying apparatus of the kind described before which lacks the problems related to the freezing of the purified water. Said object is achieved in that the cooling unit comprises an evaporator for evaporating a refrigerant to be flowed, and a heat exchange unit having the purified water pipe and the evaporator passed there through and accommodating a heat transfer fluid, wherein the evaporator reduces a temperature of the heat transfer fluid and the heat transfer fluid reduces a temperature of the purified water flowing through the purified water pipe.

According to another aspect of the present invention, there is provided a water purifying apparatus including a filter unit for filtering water to obtain purified water; a purified water pipe through which the purified water discharged from the filter unit flows; a cooling unit having the purified water pipe passed through a lower portion thereof to cool an upper side of the purified water pipe to generate cold water; and an electrolyzer for ionizing the purified water discharged from the filter unit into alkaline water and acidic water.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a configuration view illustrating a water purifying apparatus according to one exemplary embodiment of the present invention,
FIG. 2 is a configuration view illustrating a water purifying apparatus according to another exemplary embodiment of the present invention,
FIG. 3 is a configuration view illustrating a cooling unit, which constitutes the water purifying apparatus, according to one exemplary embodiment of the present invention,
FIG. 4 is a configuration view illustrating a cooling unit, which constitutes the water purifying apparatus, according to another exemplary embodiment of the present invention,
FIG. 5 is a configuration view illustrating a cooling unit, which constitutes the water purifying apparatus, according to still another exemplary embodiment of the present invention,
FIG. 6 is a cross-sectional view illustrating the cooling unit as shown in FIG. 5, and
FIG. 7 is a diagram illustrating the simulation results on the computational fluid dynamic analysis in the cooling unit as shown in FIG. 5.

### DETAILED DESCRIPTION OF THE PREFERRED EMBODIMENT

Exemplary embodiments of the present invention will now be described in detail with reference to the accompanying drawings.

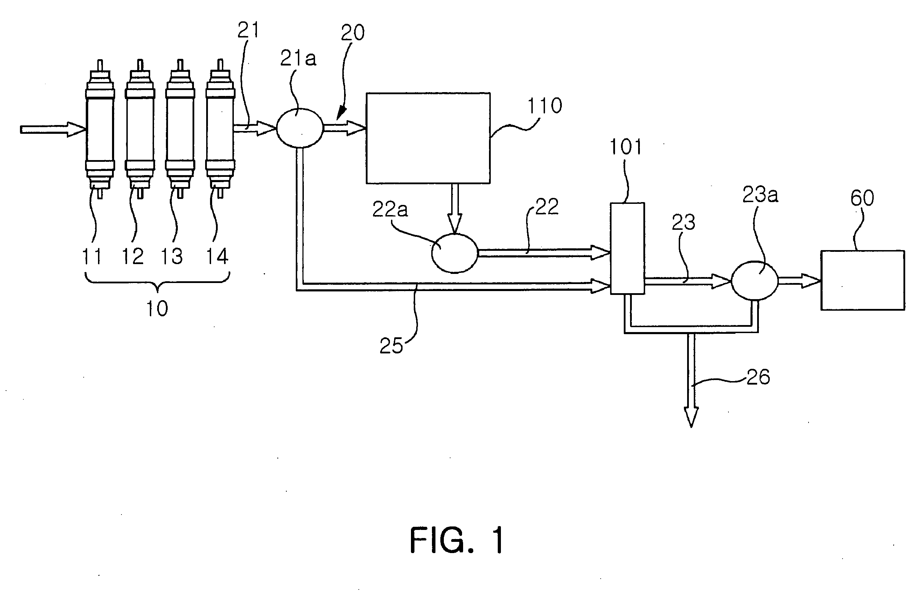

FIG. 1 is a configuration view illustrating a water purifying apparatus according to one exemplary embodiment of the present invention.

Referring to FIG. 1, the water purifying apparatus may include a filter unit 10, a purified water pipe 20 and a cooling unit 110.

The filter unit 10 may include a sediment filter 11, a pre-carbon filter 12, a reverse osmosis membrane filter 13 and a post-carbon filter 14. Also, the filter unit 10 may further include an ultra filtration filter (not shown) and a nano-filtration filter (not shown).

The sediment filter 11 filters foreign objects and suspended solids that are present in raw water since non-woven fabrics are used for the sediment filter 11. The pre-carbon filter 12 filters chlorine compounds and odors that are present in raw water since activated carbon is used for the pre-carbon filter 12. The reverse osmosis membrane filter 13 filters fine particles having a diameter of about 0.001 µm. The post-carbon filter 14 removes pigments and odors since it has relatively more excellent absorption than the activated carbon of the pre-carbon filter. The ultra filtration filter filters bacteria that are present in raw water since string-type hollow membranes are used for the ultra filtration filter.

The purified water filtered in the filter unit 10 flows along the purified water pipe 20 to the cooling unit 110. The cooling unit 110 will be described in more detail, as follows.

The purified water pipe 20 may further include an electrolyzer 101. In this case, the electrolyzer 101 may be disposed in an inlet or outlet of a purified water of a cooling unit 110. Also, a check valve 22a may be disposed in a purified water pipe section 21 between the cooling unit 110 and the electrolyzer 101.

An electrolyzed water pipe 25 may be further provided to directly connect the electrolyzer 101 with thepurified water pipe section 21 between the filter unit 10 and the cooling unit 110. In this case, a three way valve 21a may be disposed in an intake end of the electrolyzed water pipe 25. The three way valve 21a selectively supplies purified water discharged from the filter unit 10 to one of the cooling unit 110and the electrolyzer 101. The electrolyzed water pipe 25 directly supplies the purified water discharged from the filter unit 10 to the electrolyzer 101 without going through the cooling unit 110.

The electrolyzer 101 electrolyzes cold water to ionize the cold water into acidic water and alkaline water. The alkaline water in the electrolyzer 101 is supplied to a water intake unit 60 through a purified water pipe 23, and the acidic water in the electrolyzer 101 is discharged out through a drain pipe 26. The water intake unit 60 means that it has the same configuration as a cock through which a user may obtain water.

The drain pipe 26 may be connected to the purified water pipe section 23 between the electrolyzer 101 and the water intake unit 60, and a three way valve 23a may be disposed in the connected region.

An operation of the water purifying apparatus according to one exemplary embodiment of the present invention, as configured thus, will be described in more detail.

Referring to FIG. 1, when cold alkaline water is selected, raw water is supplied into the filter unit 10. The raw water is filtered through the filter unit 10 to become purified water.

In this case, the purified water discharged from the filter unit 10 flows in the cooling unit 110 under the control of the three way valve 21a between the filter unit 10 and the cooling unit 110. In this case, cooling water in the purified water pipe 20 is cooled quickly while being passed through the cooling unit 110 since the purified water pipe 20 is installed through the cooling unit 110.

The purified water cooled in the cooling unit 110 flows in the electrolyzer 101 when the check valve 22a is opened. The purified water in the electrolyzer 101 is ionized into acidic water and alkaline water through the electrolysis. The acidic water is discharged out through the drain pipe 26, and the alkaline water is supplied into the water intake unit 60.

Meanwhile, when room-temperature alkaline water is selected, the purified water discharged from the filter unit 10 flows in the electrolyzed water pipe 25 under the control of the three way valve 21a between the filter unit 10 and the cooling unit 110. In this case, the purified water purified in the filter unit 10 may not be supplied to the cooling unit 110.

The alkaline water ionized in the cooling unit 110 is directly supplied to the water intake unit 60 to allow a user to obtain alkaline water having exact pH density and a room temperature. Also, the ionized acidic water may be discharged out through the drain pipe 26.

For the above-mentioned water purifying apparatus, a user may obtain a cold alkaline water having desired pH density since the alkaline water is supplied to the water intake unit 60 right after the alkaline water is ionized in the electrolyzer 101. Therefore, it is essentially possible to solve the problem that the pH density of the alkaline water is lowered when the ionized alkaline water is stored for a certain period.

Also, since the alkaline water ionized is the electrolyzer 101 is immediately discharged into the water intake unit 60, scales may be prevented from being accumulated inside the electrolyzer 101 although the scales are formed in the electrolysis of purified water in the electrolyzer 101.

In addition, flow resistance of water is very low since a cold water tank is not separately installed in the water purifying apparatus and water flows along the purified water pipe 20. Therefore, an additional pump for forcing water to flow through the purified water pipe 20 does not need to be installed in the water purifying apparatus since the water in the purified water pipe 20 may flow to the water intake unit 60 by means of the hydraulic pressure acting on an inlet of the filter unit 10. Noises generated in the water purifying apparatus may be significantly reduced since there is no pump installed in the water purifying apparatus.

The above-mentioned water purifying apparatus is an apparatus that may supply ionized purified water. This water purifying apparatus provides cold ionized water or normal-temperature ionized water according to the preference of users.

Next, the water purifying apparatus according to another exemplary embodiment of the present invention will be described in more detail.

The water purifying apparatus according to another exemplary embodiment of the present invention is composed of a block for supplying ionized water and a block for supplying non-ionized purified water. The configuration of supplying ionized water in the another exemplary embodiment is substantially identical to the above-mentioned one exemplary embodiment. Therefore, the block for supplying non-ionized purified water will be described in more detail in the another exemplary embodiment, and the same components have the same reference numerals in the block that is substantially identical to the one exemplary embodiment.

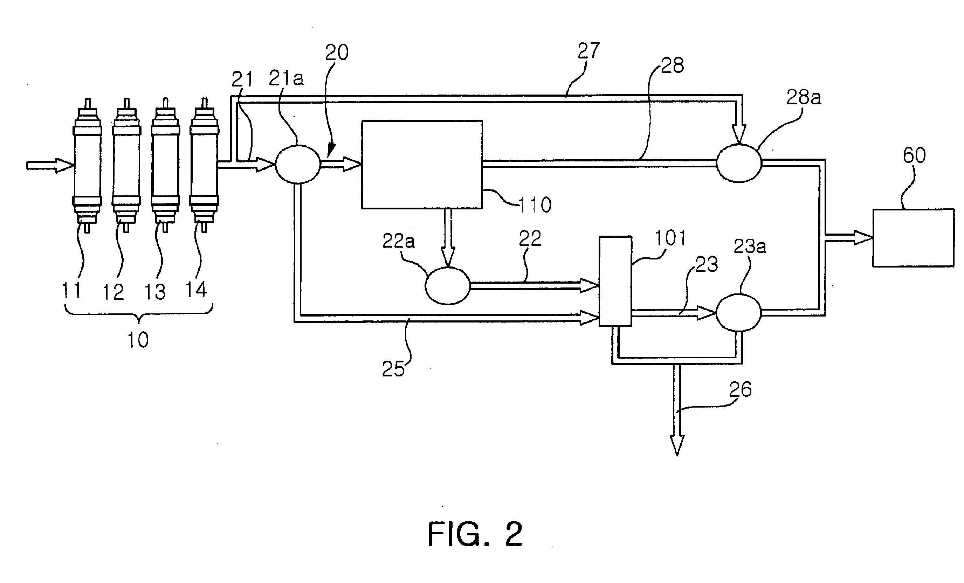

FIG. 2 is a configuration view illustrating a water purifying apparatus according to another exemplary embodiment of the present invention.

Referring to FIG. 2, the water purifying apparatus according to another exemplary embodiment of the present invention may further include a cold water pipe 28 for connecting the water intake unit 60 to the cooling unit 110. This cold water pipe 28 directly supplies cold water in the cooling unit 110 to the water intake unit 60 without going through the electrolyzer 101.

Also, the water purifying apparatus may further include a bypass pipe 27 for connecting the cold water pipe 28 to the purified water pipe section 21 between the filter unit 10 and the cooling unit 110. This bypass pipe 27 directly supplies purified water discharged from the filter unit 10 to the water intake unit 60 without going through the cooling unit 110 and the electrolyzer 101.

An operation of the water purifying apparatus according to the another exemplary embodiment of the present invention, as configured thus, will be described in detail.

Referring to FIG. 2, the operation of the water purifying apparatus is divided into operations of supplying ionized water or non-ionized water according to the preference of users. Also, the operation of supplying ionized water is divided into operations of supplying cold alkaline water and room-temperature alkaline water, and the operation of supplying non-ionized water is divided into operations of supplying cooling water and room-temperature purified water. The operation of supplying ionized water is substantially identical to that of the one exemplary embodiment, and therefore its description is omitted for clarity.

When cooling water is selected, the purified water discharged from the filter unit 10 flows in the cooling unit 110 under the control of the three way valve 21a. In this case, the purified water does not flow in the electrolyzed water pipe 25 and the bypass pipe 27.

The purified water flowing in the cooling unit 110 is cooled by the cooling unit 110to become cooling water. The check valve 21a between the cooling unit 110 and the electrolyzer 101 closes a channel, and the three way valve 28a of the cold water pipe 28 opens a channel of the cold water pipe 28.

Since the purified water pipe 20 goes through the cooling unit 110, the cooling water in the purified water pipe 20 is quickly cooled while being passed through the cooling unit 110. The cooling water in the cooling unit 110 flows along the cold water pipe 28, and flows in the water intake unit 60. Therefore, a user may obtain the cooling water.

Meanwhile, the three way valve 21a between the filter unit 10 and the cooling unit 110is closed when room-temperature purified water is selected. In this case, the purified water in the filter unit 10 does not flow in the cooling unit 110 and the electrolyzed water pipe 25.

The room-temperature purified water in the filter unit 10 flows along the bypass pipe 27. In this case, the room-temperature purified water in the bypass pipe 27 flows in the water intake unit 60 under the control of the three way valve 28a disposed in the outlet of the bypass pipe 27. Therefore, a user may obtain the room-temperature purified water.

Also, a cold water tank is not separately installed in the water purifying apparatus, and therefore it is possible to significantly reduce flow resistance of water since water flows along the purified water pipe 20 even when the ionized water or non-ionized purified water flows in the water purifying apparatus. Therefore, it is possible to significantly reduce noises generated in the water purifying apparatus since an additional pump for forcing water to flow through the purified water pipe 20 does not need to be installed in the water purifying apparatus.

The cooling unit 110 for quickly cooling purified water is commonly used in the above-mentioned water purifying apparatus according to the one and another exemplary embodiment of the present invention. Hereinafter, the cooling unit 110 that may be used for the one and another exemplary embodiment will be described in more detail.

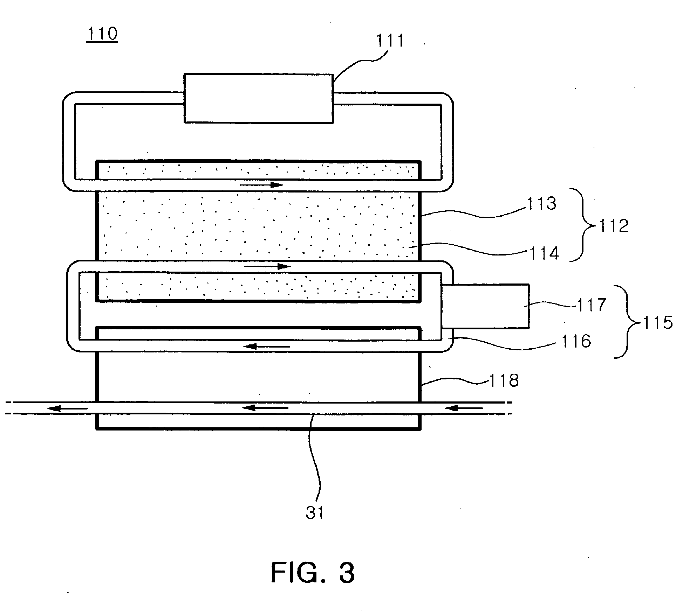

FIG. 3 is a configuration view illustrating a cooling unit, which constitutes the water purifying apparatus, according to one exemplary embodiment of the present invention.

Referring to FIG. 3, the cooling unit 110 may include an evaporator 111, a heat storage unit 112, an antifreeze circulating unit 115 and a heat exchanging unit 118.

The evaporator 111 constitutes some of a refrigerant system including a compressor (not shown), a condenser (not shown) and an expansion member (not shown). When the cooling system is put into operation, a refrigerant compressed in the compressor flows in the condenser and the expansion member and is expanded to supply a low-pressure refrigerant to the evaporator 111.

A circulation pipe 116 and a purified water pipe 31 are disposed through the heat exchanging unit 118. A heat transfer fluid may be carried in the heat exchanging unit 118.

In this case, the purified water pipe section 31 going through the heat exchanging unit 118 may be held, in a linear form or in a spirally coiled form, inside the heat exchanging unit 118. When the purified water pipe has a spirally coiled shape, this results in the increase in the time that the purified water pipe exchanges heat with the heat exchanging unit 118.

The cooling unit 110 may further include a heat storage unit 112 and an antifreeze circulating unit 115. The heat storage unit 112 and the antifreeze circulating unit 115 transfers cold air to the heat exchanging unit 118.

The heat storage unit 112 may include a receptor member 113 having the evaporator 111 passed therethrough, and a heat exchange medium 114 held inside the receptor member 113. A heat transfer fluid or ice may be used as the heat exchange medium 114.

The antifreeze circulating unit 115 may include a circulation pipe 116 through which an antifreeze flows, and a circulating pump 117 for forcing the antifreeze in the circulation pipe 116 to flow. Here, a calcium chloride solution, a magnesium chloride solution, an ethylene glycol solution or an ethyl alcohol solution may be used as the antifreeze.

An operation of the cooling unit 110 according to the one exemplary embodiment, as configured thus, will be described in detail.

When the refrigerant system is put into operation, a low-temperature refrigerant flows in the evaporator 111. Cold air in the evaporator 111 cools water in the heat storage unit 112 to form ice in the heat storage unit 112. In this case, the heat storage unit 112 functions in fact as an ice storage unit 112 since it thermally stores cool air by means of the ice.

Also, when the pump of the antifreeze circulating unit 115 is put into operation, an antifreeze circulates along the circulation pipe 116. The antifreeze in the circulation pipe 116 cools the heat exchanging unit 118 by transferring cool air of the heat storage unit 112 to the heat exchanging unit 118. In this case, purified water in the purified water pipe 31 is quickly cooled whiled being passed through the heat exchanging unit 118 since the purified water pipe 31 is installed through the heat exchanging unit 118.

As described above, the water purifying apparatus has a configuration of quickly cooling the purified water flowing along the purified water pipe s, followed by immediately obtaining the cooled purified water through the water intake unit 60. This water purifying apparatus has an advantage that, since a cold water tank is not separately installed in the water purifying apparatus, it is essentially possible to prevent external contaminants from flowing inside the cold water tank so as to contaminate cold water. Also, it is possible to reduce the volume of the water purifying apparatus since the cold water tank is not separately installed in the water purifying apparatus.

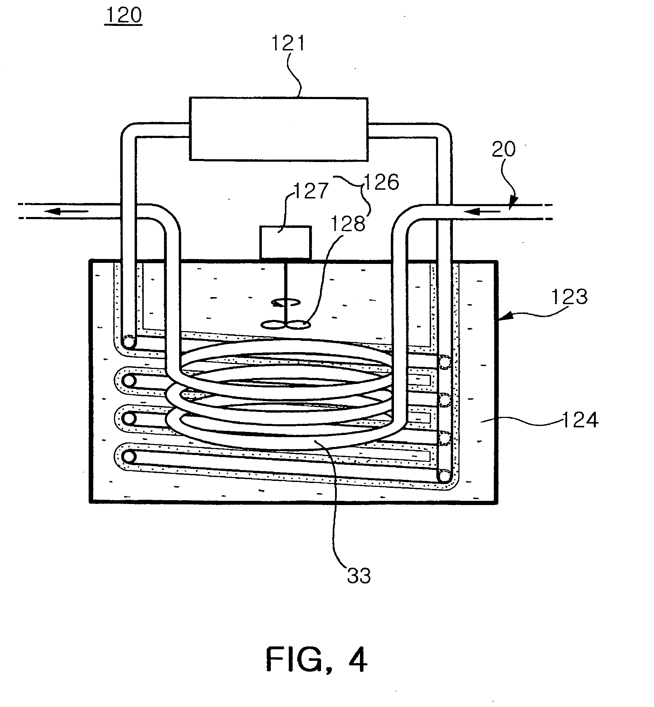

FIG. 4 is a configuration view illustrating a cooling unit, which constitutes the water purifying apparatus, according to another exemplary embodiment of the present invention.

Referring to FIG. 4, the cooling unit 120 may include an evaporator 121 and a heat exchanging unit 123.

A heat transfer fluid 124 is accommodated inside the heat exchanging unit 123. In this case, various heat transfer fluids such as water and antifreeze may be used as the heat transfer fluid 124.

The purified water pipe 33 in a coiled form is held in the heat exchanging unit 123, and the evaporator 121 may have a coiled form so that it can surround a coiled form of the purified water pipe section 33. In this case, the length of a refrigerant pipe held in the heat exchanging unit 123 may be relatively extended since the evaporator 121 is formed so that it can surround a coiled form of the purified water pipe section 33. In addition, a cooling capacity of the heat exchanging unit 123 may be increased.

Here, it is preferred to prevent the purified water from being frozen in the purified water pipe section 33 by arranging the evaporator 121 to be spaced apart from a coiled section 33 of the purified water pipe.

Also, the evaporator 121 may include a heat transfer member such as an aluminum sheet with excellent conductivity, and a refrigerant pipe installed in a zigzag type inside the heat transfer member. In this case, the heat transfer member may be disposed so that it can surround the purified water pipe 33. This configuration is not shown herein.

The heat exchanging unit 123 may further include a stirrer 126 to force the heat transfer fluid 124 to flow. The stirrer 126 may include a motor 127 and a fan 128. The fan 128 of the stirrer 126 may rotate in a direction in which purified water flows along the purified water pipe 20, or in its reverse direction.

An operation of the cooling unit according to another exemplary embodiment, as configured thus, will be described in detail.

When the refrigerant system is put into operation, a refrigerant in the evaporator 121 flows along the coiled section of the purified water pipe. Also, when the fan 128 of the stirrer 126 rotates in a direction where the refrigerant in the evaporator 121 flows, and in its reverse direction, the heat transfer fluid 124 in the heat exchanging unit 123 forms a water current against a direction where the refrigerant flows round. Therefore, it is possible to improve heat exchange efficiency between the heat transfer fluid 124 and the refrigerant.

The purified water pipe 33 has a coiled region which goes through the heat exchanging unit 123, and there fore the purified water may be sufficiently cooled while being passed through the heat exchanging unit 123.

As described above, the water purifying apparatus has a configuration of quickly cooling the purified water flowing along the purified water pipes 33, followed by immediately obtaining the cooled purified water through the water intake unit 60. This water purifying apparatus has an advantage that, since a cold water tank is not separately installed in the water purifying apparatus, it is essentially possible to prevent external contaminants from flowing inside the cold water tank so as to contaminate cold water. Also, it is possible to reduce the volume of the water purifying apparatus since the cold water tank is not separately installed in the water purifying apparatus.

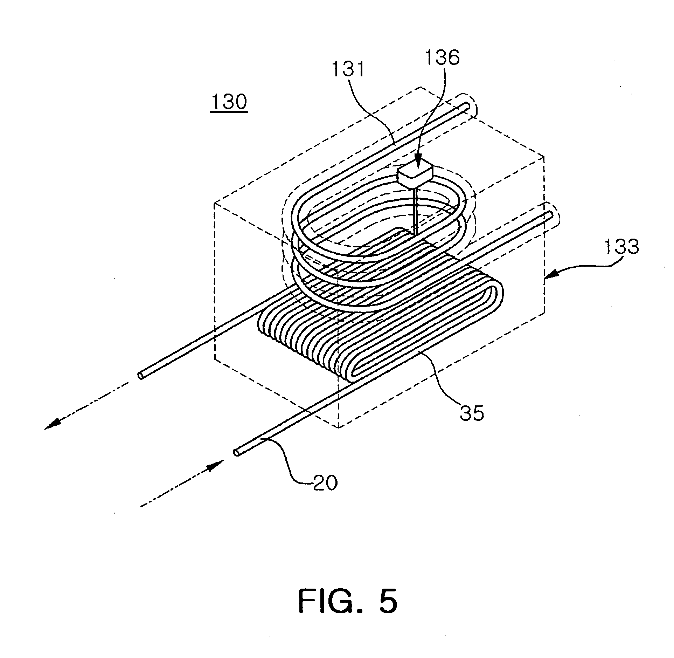

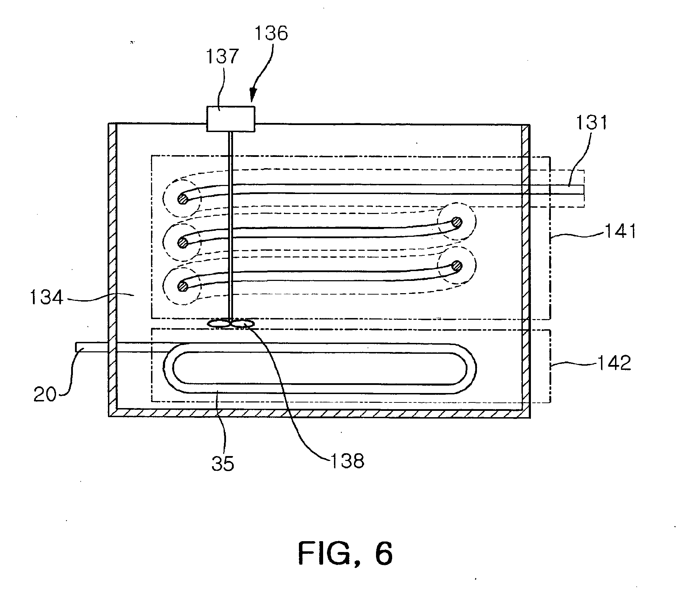

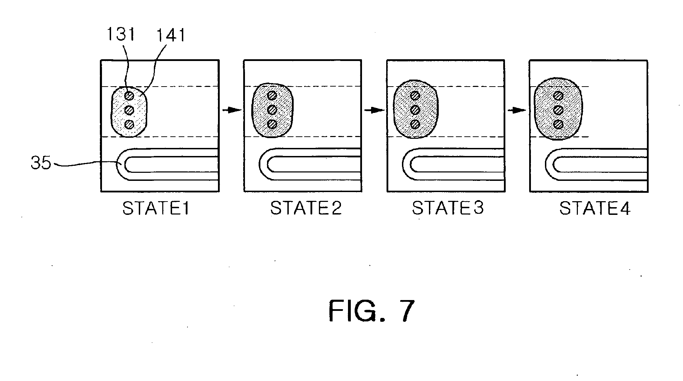

FIG. 5 is a configuration view illustrating a cooling unit, which constitutes the water purifying apparatus, according to still another exemplary embodiment of the present invention, FIG. 6 is a cross-sectional view illustrating the cooling unit, and FIG. 7 is a diagram illustrating the simulation results on the computational fluid dynamic analysis in the cooling unit.

Referring to FIG. 5, the cooling unit 130 may include an evaporator 131 disposed on the purified water pipe 35, and a heat exchanging unit 133 carrying a heat transfer fluid for exchanging heat between the evaporator 131 and the purified water pipe 35.

In this case, when the heat transfer fluid is water, the evaporator 131 is disposed so that it can be passed through an upper portion of the purified water pipe 35, and therefore the purified water pipe 35 may be disposed so that it cannot interfere with ice formed in cooling the water.

The purified water pipe 35 goes through the heat exchanging unit 133, and the evaporator 131 may be disposed on the purified water pipe 35 so that it can be spaced apart from the purified water pipe 35.

The purified water pipe 35 in a coiled form may be disposed below the heat exchanging unit 133. This purified water pipe may be wound so that its coiled region 35 can be arranged in parallel.

The refrigerant pipe is formed in a coiled form, and the evaporator 131 may be then disposed on the purified water pipe 35. A heat exchange pin may be formed in the evaporator 131.

Also, the evaporator 131 may include a heat transfer member such as an aluminum sheet with excellent conductivity, and a refrigerant pipe installed in a zigzag type inside the heat transfer member. However, this configuration is not shown herein.

A heat transfer fluid 134 is accommodated inside the heat exchanging unit 136. In this case, various heat transfer fluids such as water and antifreeze may be used as the heat transfer fluid 134.

The cooling unit 130 may further include a stirrer 136 to force the heat transfer fluid 134 to flow. The stirrer 136 may further include a motor 137 and a fan 138. The fan 138 of the stirrer 136 may rotate in the opposite direction of the purified water flowing along the purified water pipe 35 to form a water current of the heat transfer fluid 134 against a direction where the purified water flows round. Therefore, it is possible to improve heat exchange efficiency between the heat transfer fluid 134 and the purified water pipe 35.

An operation of the cooling unit according to still another exemplary embodiment of the present invention, as configured thus, will be described in detail.

Referring to FIG. 6, the heat transfer fluid 134 of the heat exchanging unit 133 is cooled in the vicinity of the evaporator 131 for the first time since a coiled section of the evaporator 131 is disposed on the heat exchanging unit 133.

In this case, when water is used as the heat transfer fluid 134, the water is frozen from the top due to the difference in its density gradient because the water has the highest density at 4°C. In this case, the evaporator is disposed so that it can be passed through an upper portion of the purified water pipe, and therefore the purified water pipe may be disposed so that it cannot interfere with ice formed in cooling the water.

When the temperature of water is suddenly dropped by the evaporator 131, the water in the heat exchanging unit 133 is divided into up and down regions, i.e., an ice region and a heat exchange region. Therefore, it is able to prevent the purified water in the purified water pipe 35 from being frozen although the temperature of the water is dropped suddenly.

Referring to FIG. 7, a temperature distribution of the heat exchanging unit 133 is simulated using the computational fluid dynamic analysis. As a result, it is revealed that ice grows only at an upper portion of the heat exchanging unit 133 but hardly grows toward a lower portion of the heat exchanging unit 133 although the temperature of the water is dropped suddenly. Therefore, it is possible to prevent the purified water in the purified water pipe 35 from being frozen although the water is used as the heat transfer fluid 134 in the heat exchanging unit 133.

Since ice does not grow into the bottom of the heat exchanging unit 133 not to interfere with the purified water pipe 35, it is able to prevent the purified water in the purified water pipe 35 from being frozen

While the present invention has been shown and described in connection with the exemplary embodiments, it will be apparent to those skilled in the art that modifications and variations can be made without departing from the spirit and scope of the invention as defined by the appended claims.

## Claims

1. A water purifying apparatus, comprising a filter unit (10) for filtering water to obtain purified water; a purified water pipe (20; 31; 33; 35) through which the purified water discharged from the filter unit (10) flows; and a cooling unit (110) cooling the purified water pipe to generate cold water, **characterized in that** the cooling unit (110) comprises an evaporator (111; 121; 131) for evaporating a refrigerant to be flowed, and a heat exchange unit (112, 115, 118; 123; 133) having the purified water pipe (20; 31; 33; 35) and the evaporator (111; 121; 131) passed therethrough and accommodating a heat transfer fluid (114; 124), wherein the evaporator (111; 121; 131) reduces a temperature of the heat transfer fluid (114; 124) and the heat transfer fluid reduces a temperature of the purified water flowing through the purified water pipe (20, 31; 33; 35).

2. The water purifying apparatus of claim 1, wherein the cooling unit further includes:
a heat storage unit accommodating a cooling medium to be cooled by the evaporator; and
an antifreeze circulating unit including a circulation pipe passed through the heat storage unit and the heat exchanging unit to circulate an antifreeze through the circulation pipe.

3. The water purifying apparatus of claim 1, wherein the purified water pipe in a coiled form is accommodated in the heat exchanging unit, and
wherein the evaporator is wound around the purified water pipe.

4. The water purifying apparatus of claim 1, wherein the heat transfer fluid is water, and
wherein the evaporator is disposed so that the evaporator is passed through an upper portion of the purified water pipe, and the purified water pipe is disposed so that the evaporator does not interferes with ice formed in cooling the water.

5. The water purifying apparatus of claim 4, wherein the purified water pipe goes through the heat exchanging unit, and
wherein the evaporator is disposed on the purified water pipe so that the evaporator is spaced apart from the purified water pipe.

6. The water purifying apparatus of claim 1, wherein the heat exchanging unit further comprises a stirrer for forcing the heat transfer fluid to flow.

7. The water purifying apparatus of claim 1, wherein a purified water pipe section passed through the cooling unit is installed in a coiled form.

8. The water purifying apparatus of claim 1, further comprising a cold water pipe for connecting the water intake unit with the cooling unit.

9. The water purifying apparatus of claim 1, further comprising a bypass pipe for connecting the water intake unit with a pipe arranged between the filter unit and the cooling unit.

10. The water purifying apparatus according to any of the preceding claims, further comprising an electrolyzer for ionizing the purified water discharged from the filter unit into alkaline water and acidic water.

11. The water purifying apparatus of claim 10, further comprising an electrolyzed water pipe for connecting the electrolyzer with a pipe arranged between the filter unit and the cooling unit.

12. The water purifying apparatus of claim 10 or 11, wherein the electrolyzer is disposed in an outlet of a cooling water of the cooler unit.

## Patentansprüche

1. Wasserreinigungsvorrichtung, enthaltend eine Filtereinheit (10) zum Filtern von Wasser, um gereinigtes Wasser zu erhalten; eine Rohrleitung (20; 31; 33; 35) für gereinigtes Wasser, durch die das gereinigte Wasser fließt, das aus der Filtereinheit (10) abgegeben wird; und eine Kühleinheit (110), die die Rohrleitung für gereinigtes Wasser kühlt, um kaltes Wasser zu erzeugen, **dadurch gekennzeichnet, dass** die Kühleinheit (110) einen Verdampfer (111; 121; 131) zum Verdampfen eines in Strömung zu versetzenden Kühlmittels und eine Wärmetauscheinheit (112, 115, 118; 123; 133) enthält, die über die Rohrleitung (20; 31; 33; 35) für gereinigtes Wasser und den Verdampfer (111; 121; 131) verfügt, die diese durchlaufen, und ein Wärmeübergangsfluid (114; 124) aufnimmt, wobei der Verdampfer (111; 121; 131) eine Temperatur des Wärmeübergangsfluides (114; 124) verringert und das Wärmeübergangsfluid eine Temperatur des gereinigten Wassers verringert, das durch die Rohrleitung (20, 31; 33; 35) für gereinigtes Wasser fließt.

2. Wasserreinigungsvorrichtung nach Anspruch 1, bei der die Kühleinheit weiterhin enthält:
eine Wärmespeichereinheit, die ein Kühlmedium aufnimmt, das von dem Verdampfer gekühlt werden soll; und
eine Frostschutzmittel-Zirkulationseinheit, die eine Zirkulationsrohrleitung enthält, die durch die Wärmespeichereinheit und die Wärmetauscheinheit verläuft, um ein Frostschutzmittel durch die Zirkulationsleitung zirkulieren zu lassen.

3. Wasserreinigungsvorrichtung nach Anspruch 1, bei der die Rohrleitung für gereinigtes Wasser in spiralförmiger Gestalt in der Wärmetauscheinheit aufgenommen ist und
der Verdampfer um die Rohrleitung für gereinigtes Wasser gewunden ist.

4. Wasserreinigungsvorrichtung nach Anspruch 1, bei der das Wärmeübergangsfluid Wasser ist, und
der Verdampfer derart angeordnet ist, dass der Verdampfer durch einen oberen Abschnitt der Rohrleitung für gereinigtes Wasser verläuft, und die Rohrleitung für gereinigtes Wasser derart angeordnet ist, dass der Verdampfer nicht mit Eis in Berührung kommt, das sich beim Kühlen des Wassers bildet.

5. Wasserreinigungsvorrichtung nach Anspruch 4, bei der das Rohr für gereinigtes Wasser durch die Wärmetauscheinheit verläuft und
der Verdampfer an der Rohrleitung für gereinigtes Wasser derart angeordnet ist, dass der Verdampfer von der Rohrleitung für gereinigtes Wasser beabstandet ist.

6. Wasserreinigungsvorrichtung nach Anspruch 1, bei der die Wärmetauscheinheit weiterhin ein Rührwerk enthält, um einen Fluss des Wärmeübergangsfluides zu erzwingen.

7. Wasserreinigungsvorrichtung nach Anspruch 1, bei der ein Rohrleitungsabschnitt für gereinigtes Wasser, der die Kühleinheit durchläuft, in spiralförmiger Gestalt installiert ist.

8. Wasserreinigungsvorrichtung nach Anspruch 1, weiterhin enthaltend eine Kaltwasserrohrleitung zum Verbinden der Wassereinlasseinheit mit der Kühleinheit.

9. Wasserreinigungsvorrichtung nach Anspruch 1, weiterhin enthaltend eine Umgehungsrohrleitung zum Verbinden der Wassereinlasseinheit mit einer Rohrleitung, die zwischen der Filtereinheit und der Kühleinheit angeordnet ist.

10. Wasserreinigungsvorrichtung nach einem der vorhergehenden Ansprüche, weiterhin enthaltend einen Elektrolyseur zum lonisieren des gereinigten Wassers, das aus der Filtereinheit ausgegeben wird, in alkalisches Wasser und saures Wasser.

11. Wasserreinigungsvorrichtung nach Anspruch 10, weiterhin enthaltend eine Rohrleitung für elektrolysiertes Wasser zum Verbinden des Elektrolyseurs mit einer Rohrleitung, die zwischen der Filtereinheit und der Kühleinheit angeordnet ist.

12. Wasserreinigungsvorrichtung nach Anspruch 10 oder 11, bei der der Elektrolyseur in einem Auslass eines Kühlwassers der Kühlereinheit angeordnet ist.

## Revendications

1. Appareil de purification d'eau comprenant une unité de filtre (10) pour filtrer l'eau afin d'obtenir de l'eau purifiée ; un tuyau d'eau purifiée (20 ; 31 ; 33 ; 35) à travers lequel l'eau purifiée déchargée de l'unité de filtre (10) s'écoule ; et une unité de refroidissement (110) refroidissant le tuyau d'eau purifiée afin de générer de l'eau froide, **caractérisé en ce que** l'unité de refroidissement (110) comprend un évaporateur (111 ; 121 ; 131) pour faire évaporer un réfrigérant destiné à s'écouler, et une unité d'échange de chaleur (112, 115, 118 ; 123 ; 133) ayant le tuyau d'eau purifiée (20 ; 31 ; 33 ; 35) et l'évaporateur (111 ; 121 ; 131) qui passent à travers cette dernière et logeant un fluide de transfert de chaleur (114 ; 124), dans lequel l'évaporateur (111 ; 121 ; 131) réduit une température du fluide de transfert de chaleur (114 ; 124) et le fluide de transfert de chaleur réduit une température de l'eau purifiée s'écoulant à travers le tuyau d'eau purifiée (20, 31 ; 33 ; 35).

2. Appareil de purification d'eau selon la revendication 1, dans lequel l'unité de refroidissement comprend en outre :
une unité de stockage de chaleur logeant un milieu de refroidissement destiné à être refroidi par l'évaporateur ; et
une unité de circulation d'antigel comprenant un tuyau de circulation qui passe à travers l'unité de stockage de chaleur et l'unité d'échange de chaleur pour faire circuler un antigel dans le tuyau de circulation.

3. Appareil de purification d'eau selon la revendication 1, dans lequel le tuyau d'eau purifiée se présentant sous une forme hélicoïdale est logé dans l'unité d'échange de chaleur, et
dans lequel l'évaporateur est enroulé autour du tuyau d'eau purifiée.

4. Appareil de purification d'eau selon la revendication 1, dans lequel le fluide de transfert de chaleur est de l'eau, et
dans lequel l'évaporateur est disposé de sorte que l'évaporateur traverse une partie supérieure du tuyau d'eau purifiée, et le tuyau d'eau purifiée est disposé de sorte que l'évaporateur n'interfère pas avec la glace formée en refroidissant l'eau.

5. Appareil de purification d'eau selon la revendication 4, dans lequel le tuyau d'eau purifiée traverse l'unité d'échange de chaleur, et
dans lequel l'évaporateur est disposé sur le tuyau d'eau purifiée de sorte que l'évaporateur est éloigné du tuyau d'eau purifiée.

6. Appareil de purification d'eau selon la revendication 1, dans lequel l'unité d'échange de chaleur comprend en outre un agitateur pour obliger le fluide de transfert de chaleur à s'écouler.

7. Appareil de purification d'eau selon la revendication 1, dans lequel une section de tuyau d'eau purifiée qui traverse l'unité de refroidissement est installée sous une forme hélicoïdale.

8. Appareil de purification d'eau selon la revendication 1, comprenant en outre un tuyau d'eau froide pour raccorder l'unité d'admission d'eau avec l'unité de refroidissement.

9. Appareil de purification d'eau selon la revendication 1, comprenant en outre un tuyau de dérivation pour raccorder l'unité d'admission d'eau avec un tuyau agencé entre l'unité de filtre et l'unité de refroidissement.

10. Appareil de purification d'eau selon l'une quelconque des revendications précédentes, comprenant en outre un électrolyseur pour ioniser l'eau purifiée déchargée par l'unité de filtre en eau alcaline et eau acide.

11. Appareil de purification d'eau selon la revendication 10, comprenant en outre un tuyau d'eau électrolysée pour raccorder l'électrolyseur avec un tuyau agencé entre l'unité de filtre et l'unité de refroidissement.

12. Appareil de purification d'eau selon la revendication 10 ou 11, dans lequel l'électrolyseur est disposé dans une sortie d'une eau de refroidissement de l'unité de refroidissement.
